# EUROPEAN PATENT SPECIFICATION

(11) **EP 3 940 643 B1**
(45) Date of publication and mention of the grant of the patent: **11.11.2026**
(21) Application number: 21150369.3
(22) Date of filing: 06.01.2021
(51) Int. Cl.: G06T 7/593, G06T 7/80

(54) **UNDERWATER 3D RECONSTRUCTION DEVICE**
UNTERWASSERVORRICHTUNG ZUR 3D-REKONSTRUKTION
DISPOSITIF DE RECONSTRUCTION 3D SOUS-MARINE

(30) Priority: 16.07.2020 EP 20186341
(43) Date of publication of application: 19.01.2022
(73) Proprietor: FURUNO ELECTRIC CO., LTD., Nishinomiya-City, Hyogo 662-8580 (JP)
(72) Inventor: IKEGAMI, Atsushi, Nishinomiya-city, Hyogo 662-8580 (JP)
(74) Representative: Cleveland Scott York

(56) References cited:
- WO-A2-2018/111124
- JP-A- 2014 098 576
- US-A1- 2013 002 826
- "3D Recording and Interpretation for Maritime Archaeology", vol. 31, 1 January 2019, SPRINGER INTERNATIONAL PUBLISHING, Cham, ISBN: 978-3-030-03635-5, ISSN: 2211-0577, article MARK SHORTIS: "Camera Calibration Techniques for Accurate Measurement Underwater", pages: 11 - 27, XP055752590, DOI: 10.1007/978-3-030-03635-5_2

## Description

The present subject matter described herein relates to the technical field of reconstructing fish image. The present subject matter, particularly, relates to a device for underwater fish size measurement based on stereo camera & camera calibration.

Background description includes information that may be useful in understanding the present invention. It is not an admission that any of the information provided herein is prior art or relevant to the presently claimed invention, or that any publication specifically or implicitly referenced is prior art.

Aquatic products play an important role in meeting human protein demand. To sustainably manage fish resources with high efficiency, fishermen have to catch fish appropriately and obtain meaningful information. Pre-catch knowledge of fish size is important during fishing operations as undersized and/or low-quality fish can lead to financially unsustainable operations. Obtaining fish size estimates without biological sampling is also of interest for autonomous platforms such as surface and underwater camera devices.

An estimate of correct fish size becomes a vital parameter to appraise stock status, and increase economic benefits for an aquaculture industry. In fish culture, gathering fish size information to describe and manage the growth of fish is necessary to harvest the stock at the optimum time. Fish size can be used to predict a range of population-level characteristics and to evaluate the stocks for rearing activity. Determining the fish size finds an application in marketing, fish should be sorted by size after harvesting to estimate the value. This step is necessary to set different prices and manage market economics. Simultaneously, size information can be used to monitor quality in the food industry, which can help the aquaculture industry to evaluate the price. The size information also can help to measure biomass and morphology of the fish, such as volume and even estimation of fat content. Therefore, fish size is a significant parameter necessary for the aquaculture industry.

The conventional methods disclose calculating fish size using underwater stereo cameras and 3D reconstruction techniques.

When performing fish sizing, cameras are in a multi medium (air, water, transparent window) condition, which causes refraction. Several known camera calibration techniques are employed to negate the refraction conditions. Camera calibration technique estimates the parameters of a lens and image sensor of a camera. These parameters are used to correct lens distortion, measure the size of an object in world units, or determine the location of the object in the scene. The parameters may include intrinsic, extrinsic, and distortion coefficients. To estimate the camera parameters, 3-D world points are required and their corresponding 2-D image points. These correspondences are obtained using multiple images of a calibration pattern. Using the correspondences, camera parameters are solved.

In other known techniques a pinhole camera is used in the devices to determine size. Pinhole camera model does not take refractions into consideration. The pinhole camera model is a single focal length model, but due to refractions, the focal length and the distortion coefficients are not constant.

A pinhole camera model is often represented by the following equation: s[x y 1]^{T} = A [R t] [X Y Z 1]^{T} ... (eq. 1)
where:
- x, y is a 2D point position in pixel coordinates
- X, Y, Z is a 3D position in World coordinates
- s is a scale factor
- A, the intrinsic matrix, is a matrix made of the 5 intrinsic parameters ( $A = \begin{matrix}α & γ & u 0 \\ 0 & β & vo \\ 0 & 0 & 1\end{matrix}$), among which α and β represent focal length in terms of pixels.
- [R t], the extrinsic parameters, are the Rotation and Translation which relates the World coordinate system to the camera coordinate system.

The camera model also includes lens distortion that includes radial and tangential lens distortions.
The radial distortion parameters model the radial distortion as follows: ${x}_{distorted} = x \left(1+k1∗{r}^{2}+k2∗{r}^{4}+k3∗{r}^{6}\right)$ ${y}_{distorted} = y \left(1+k1∗{r}^{2}+k2∗{r}^{4}+k3∗{r}^{6}\right)$ The tangential distortion parameters model the tangential distortion as follows: ${x}_{distorted} = x + \left[2∗p1∗x∗y+p2∗\left({r}^{2}+2∗{x}^{2}\right)\right]$ ${y}_{distorted} = y + \left[p1∗\left({r}^{2}+2∗{y}^{2}\right)+2∗p2∗x∗y\right]$ where:
- x, y is an undistorted pixel location
- x_{distorted}, y_{distorted} is a distorted point
- k1, k2, k3 are the radial distortion coefficients of the lens
- p1, p2 are the tangential distortion coefficients of the lens
- ${r}^{2} = {x}^{2} + {y}^{2}$

The calculation of these intrinsic parameters, extrinsic parameters, and distortion coefficients and 3D reconstruction lead to calculating the size of an object, preferably fish in underwater. These parameters and coefficients can be estimated by calibration. There exist many calibration methods, such as Zhang's method, Tsai's method used in such techniques.

The problem addressed by the present invention is, when the cameras that perform 3D reconstruction and measure fish size are positioned in the underwater environment, there are refractions, and focal length, and distortion coefficients do not remain constant. Such conditions lead to incorrect 3D reconstruction with erroneous fish size measurement. The cameras, according to the existing methods, are placed in a water-resistant case having a transparent window in front of the lenses. As a ray of light that reflects from an underwater target (e.g., a fish) to a camera, it has to travel through different mediums i.e., water, transparent window, and air causing refractions. Due to refraction, the parameters of the camera change depending on the distance between the target object and the camera. As a result, size of underwater targets cannot be accurately calculated.

There are some conventional countermeasures discussed in the prior arts. Prior arts present devices with fitting of a water housing on the lens of the camera so that it eliminates refraction. Such devices have a complex construction and are not easy-to-use.

Prior art WO2019/188506 discloses a fish size calculation device. The prior art discloses a fish length calculation system based on camera. A calibration of the camera is performed using a conventional method, such as DLT. Depending on the distance between the fish and the camera, the error that occurs when calculating fish length with this calibrated system is known and the error is corrected. This method has a drawback as it seems to provide correct target size information when the fish is on the axis perpendicular to the camera and intersecting with the camera but when the fish is away from that axis the method seems to provide an incorrect reading.

US 2013/002826 discloses an arrangement in which, before measuring a three-dimensional point of a target object from a stereo image, calibration data according to an in-focus position of taking optical systems are applied to the stereo image. To select the calibration data, an object distance is acquired according to parallax obtained from the stereo image. The object distance is an estimated focusing distance corresponding to the in-focus position. One of the calibration data assigned with a set distance region in which the estimated focusing distance is included is selected.

The document "Camera Calibration Techniques for Accurate Measurement Underwater", Mark Shortis, 3D Recording and Interpretation for Maritime Archaeology, 1 January 2019, discloses various techniques for calibration of an underwater calibration system.

JP 2014-98576 discloses a motion capture device for digitally recording the movement of people and objects. A marker is attached to an object which is photographed and measured from different angles by a plurality of imaging means. Marker position coordinates are calculated from image data. If there is a refraction factor between the marker and the imaging means, then the space is divided into a plurality of cubic lattices and the amount of error due to refraction for each cubic lattice is determined.

According to one aspect of the present invention there is provided a 3D reconstruction device as defined in claim 1.

According to another aspect of the invention there is provided a 3D reconstruction method as defined in claim 15.

Preferred features of the invention are recited in the dependent claims.

Embodiments of the present invention address the problem by correctly performing 3D reconstruction and therefore correctly calculating an underwater target size using a stereo camera and calibration techniques. The stereo camera of embodiments of the present invention is calibrated to obtain a set of intrinsic and extrinsic parameters along with distortion coefficients at a plurality of distances. Post calibration, 3D reconstruction is performed to provide correct fish size.

Solutions to one or more drawbacks of existing techniques, and additional advantages are provided in the present disclosure. Additional features and advantages are realized through the technicalities of the present disclosure. Other embodiments and aspects of the disclosure are described in detail herein and are considered to be a part of the claimed disclosure.

The present disclosure relates to a 3D image reconstruction device of an underwater target that includes a stereo camera, a data storage device, and a 3D reconstruction module. The stereo camera includes a first camera and a second camera configured to take a pair of pictures of a target in an underwater environment. The data storage device is configured to store a plurality of sets of parameters, each set of the plurality of sets of parameters modelling the stereo camera that produces pictures of an underwater target at a distance from the stereo camera. The plurality of sets of parameters model the stereo camera at different distances. The 3D reconstruction module is configured to calculate a 3D position of the target based on a 2D position of the target on the pair of pictures and a selected set selected from the plurality of sets of parameters.

The parameters of each set of parameters comprise parameters of a pinhole camera model.

The stereo camera is arranged to take pictures of the target through a plurality of different media, and the plurality of sets of parameters are arranged to compensate for refractions caused by the plurality of different media.

In an embodiment, a distance calculation module is configured to calculate a distance between the target and the stereo camera based on a 2D position of the target on the pair of pictures. A set selection module is configured to select the selected set based on the calculated distance.

Preferably, the set selection module is configured to select the selected set by selecting one set from the plurality of sets of parameters, the distance of the selected set being closest to the calculated distance from among the plurality of sets of parameters.

In another embodiment of the invention, the set selection module is configured to select the selected set by selecting a first set and a second set from the plurality of sets of parameters, the distance of the first set and the second set being closest to the calculated distance on either side of the calculated distance, respectively. The 3D reconstruction module is configured to calculate an interpolated set from the first set and the second set, and calculate the 3D position of the target based on the interpolated set.

In another embodiment of the invention, the distance calculation module is configured to calculate the distance using one of the plurality of sets of parameters.

In yet another embodiment of the invention, the distance calculating module is configured to calculate the distance using a focal length of the stereo camera and a refractive index of water with respect to air.

In one embodiment of the present disclosure, each set of the plurality of sets of parameters is obtained by calibrating the stereo camera with an underwater target placed in a vicinity of the distance for which the set is to be obtained.

Preferably, the parameters of each set of parameters further comprise lens distortion coefficients.

In an embodiment of the invention, the device comprises a waterproof case enclosing air and the stereo camera, and including a light transparent material though which the stereo camera takes the pictures of the target.

In an embodiment of the invention, the first camera includes one or more lens elements arranged in a fixed position within the first camera, and the second camera includes one or more lens elements arranged in a fixed position within the second camera.

The foregoing summary is illustrative only and is not intended to be in any way limiting. In addition to the illustrative aspects, embodiments, and features described above, further aspects, embodiments, and features will become apparent by reference to the drawings and the following detailed description.

Embodiments of the present invention provide a device which performs correct 3D reconstruction of image of a target with stereo camera in underwater conditions. The device eliminates requirement of a special model that would take multi media into consideration or a special camera that eliminates refraction (water housing), with the conventional pinhole camera model, using a conventional calibration method.

It is to be noted, however, that the appended drawings illustrate only typical embodiments of the present subject matter and are therefore not to be considered for limiting of its scope. The detailed description is described with reference to the accompanying figures. In the figures, a reference number identifies the figure in which the reference number first appears. The same numbers are used throughout the figures to reference like features and components. Some embodiments of system or methods or structure in accordance with embodiments of the present subject matter are now described, by way of example, and with reference to the accompanying figures, in which:
Fig. 1 is a block diagram illustrating the structural features of an embodiment of the invention;
Fig. 2 illustrates the present device placed in an underwater condition;
Fig. 3 is a flowchart illustrating one example of a procedure to reconstruct 3D image of a target according to an embodiment of the present invention;
Fig. 4 is a flowchart illustrating one example of a procedure to perform calibration according to an embodiment of the present invention;
Fig. 5 illustrates a simplified structure within the first camera and the second camera.

The figures depict embodiments of the present subject matter for the purposes of illustration only.

Embodiments of the invention use a stereo camera system to measure fish size. As a general rule, cameras have to be calibrated. However, when cameras are placed in a water-resistant case and then placed in a water environment, the present inventor has found that the calibration parameters change depending on the distance between a target to be measured (fish) and the cameras, due to refractions that occur. In order to solve this problem, in embodiments of the invention, calibration is performed at a plurality of distances from the stereo camera. The plurality of sets of calibration parameters thus created is stored in advance in a data storage device. Then, when a fish is detected by the stereo camera, a rough distance to the fish is calculated. Based on the calculated rough distance, a set of calibration parameters is selected from among the plurality of sets stored in the data storage device. The size of the fish is then calculated by triangulation using the selected set of calibration parameters.

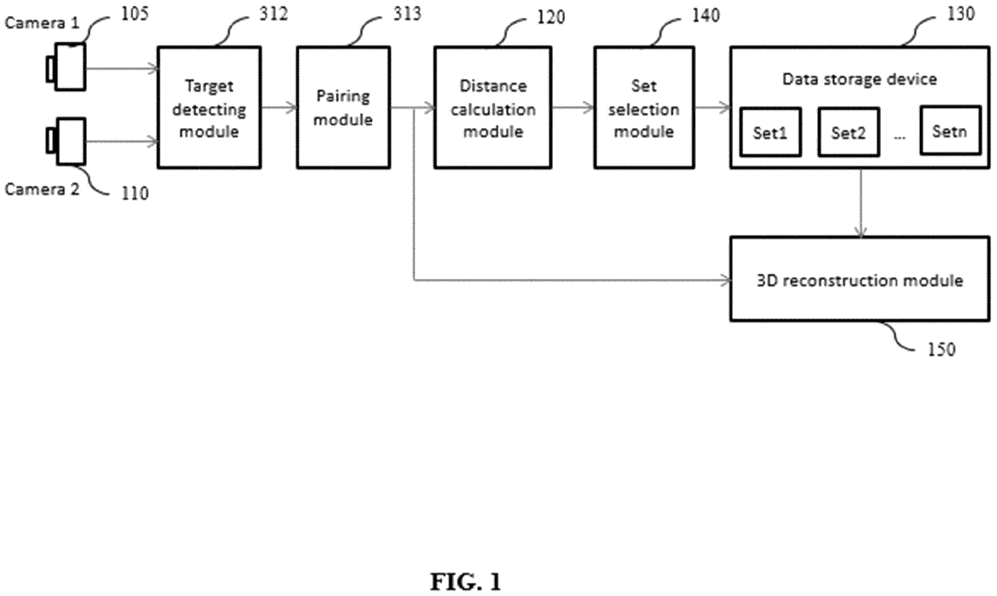

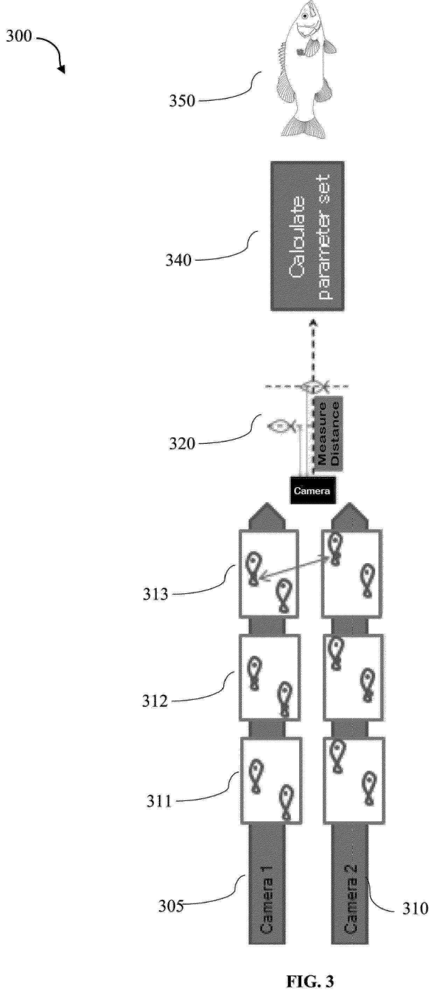

Referring to Figs. 1 and 3, a device (100) for performing a 3D reconstruction of a target, preferably a fish is illustrated. In an embodiment, the device (100) includes a stereo camera, comprising of a first camera (105, 305) and a second camera (110, 310), a target detecting module (312), a pairing module (313), a distance calculation module (120, 320), a set selection module (140, 340), a data storage device (130), and a 3D reconstruction module (150, 350).

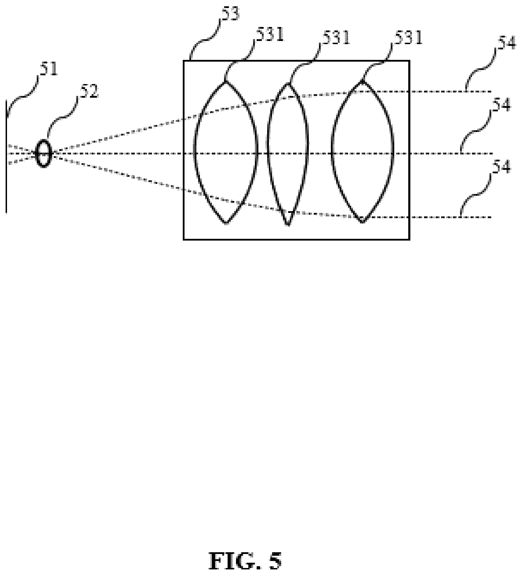

Fig. 5 illustrates a simplified structure within the first camera (105, 305) and the second camera (110, 310). Each of the first camera and the second camera includes an image sensor (51), a pinhole (52), and a lens (53). The lens (53) is made of one or more lens elements (531). Light (54) from a scene goes through the lens (53), the pinhole (52) and gets projected on the image sensor (51). In the embodiments of the invention, a distance between the image sensor (51) and the lens (53) is fixed, and a distance between the pinhole (52) and the lens (53) is fixed. When the lens (53) is made of more than one lens element (531), a spacing between the lens elements (531) is also fixed. As a result, the first camera comprises one or more lens elements (531) arranged in a fixed position within the first camera, and the second camera comprises one or more lens elements (531) arranged in a fixed position within the second camera.

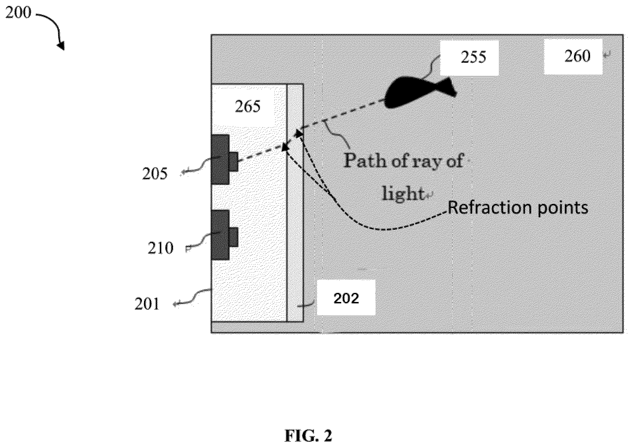

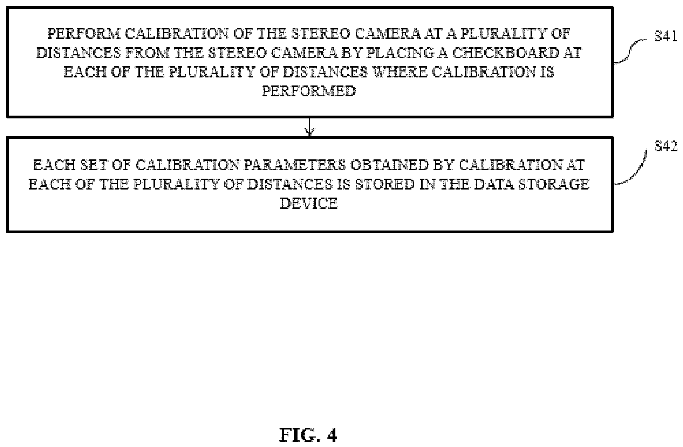

In an embodiment of the invention, an in-house calibration step is performed before performing the 3D reconstruction with the device (100). Referring to Fig. 2, in a multi medium environment, in which refractions occur, the parameters of the pinhole camera model and the distortion coefficients are changing depending on a position of the target (255) relative to the stereo camera (205,210). For this reason, the stereo camera is calibrated in a manner as follows, referring to Fig. 4:
a) Calibration is performed in a medium, preferably water (260), at a plurality of distances from the stereo camera (205, 210) using a conventional calibration method such as Zhang's calibration method and methods alike. The stereo camera is placed in a waterproof case (201) enclosing air (265) and including a light transparent material (202) through which the stereo camera takes the picture of target, such as a checkerboard. In order to perform calibration at the plurality of distances, the checkerboard is placed in a vicinity of the distances (Step S41).
b) This results in creating a plurality of sets of parameters. Each set comprises intrinsic and extrinsic parameters of the pinhole camera model. Each set also preferably comprises radial and tangential lens distortion coefficients. The sets are obtained for each of a plurality of distances at which the calibration has been performed. For the instance, set 1 at distance 1, ...., set n at distance n. The data storage device (130) is configured to store the plurality of sets of parameters (Step S42). Each set of the plurality of sets of parameters models the stereo camera that produces pictures of an underwater target at the distance from the stereo camera at which the calibration has been performed. It is to be understood that the sets from the plurality of sets of parameters are modelling the stereo camera at different distances.
c) Once the in-house calibration using the above steps is performed, the following 3D reconstruction can be performed.

Referring to Fig.2, the stereo camera (105, 205, 110, 210) is placed in a waterproof case (201) enclosing air (265) and including a light transparent material (202) through which the stereo camera takes pictures of target (255).

The stereo camera (105, 305 110, 310) is configured to take pair of pictures (311) using a camera sync strobe module. The stereo camera (105, 305, 110, 310) is configured to take a pair of pictures (311) at the same or almost same timing using synchronization conventionally done by, for example, using General Purpose Input/output (GPIO) Synchronization, bus timestamp synchronization, sound signal synchronization or methods alike.

The target detecting module (312) is configured to perform task of detecting a fish on each picture (311). A point on a fish is shown to indicate the presence of a detected fish. In an alternative, instead of a point, a filled area or a rectangular box is also conventionally used to indicate presence of a detected fish. This process is conventionally executed by processor circuitry, and by some cameras. It is proposed that conventional point detection methods are used for performing the task of detecting fish such as, machine learning, feature point detection, edge detection techniques.

The pairing module (313) is configured to pair a fish on each pair of pictures (311). It pairs corresponding fish on the pair of pictures. It is apparent that there are several conventional pairing methods available that can be used, such as, block matching, with or without machine learning capabilities.

The distance calculating module (120, 320) is configured to calculate a rough estimation of distance between the target and the stereo camera. The distance calculation is based on a 2D position of the target on the pair of pictures.

In a feature of the invention, the distance calculating module (120, 320) is configured to calculate the distance using a method as follows:
a) Acquire the parameters of the pinhole camera model and the distortion coefficients provided in the specifications of the camera by the maker. These parameters are usually design parameters provided from the design specifications from the maker and are actually not measured by the maker after the production of the camera.
b) As it is assumed the specifications of the maker have been established for a use of the camera in air, multiply the parameters related to the focal distance (i.e., α and β) by the refractive index of water with respect to air i.e. 1.33.
c) Use default values for parameters and coefficients not provided in the specifications.
d) Calculate the distance of the target detected at step (312) with these parameters and coefficients, and a 2D position of the target on the pair of pictures (311) using for example triangulation principle.

In another feature of the invention, the distance calculating module (120, 320) is configured to calculate the distance using a method as follows:
a) Assuming that the stereo camera (105,110,305,310) has been calibrated beforehand in air, acquire the resulting parameters of the pinhole camera model and the distortion coefficients. These parameters are thus stored in the data storage device (130).
b) Multiply the parameters related to the focal distance (i.e., α and β) by the refractive index of water with respect to air i.e., 1.33.
c) Calculate the distance of the target detected at step (312) with these parameters and coefficients, and a 2D position of the target on the pair of pictures using for example triangulation principle.

In a preferred feature of the invention, the distance calculating module (120, 320) is configured to calculate the distance using a method as follows:
a) Retrieve from the data storage device (130) one of the sets of parameters acquired during the in-house calibration in water. Any one set from the sets of parameters may be selected.
b) Calculate the distance of the target detected at step (312) with the retrieved set of parameters, and a 2D position of the target on the pair of pictures using for example triangulation principle.

The set selection module (140, 340) is configured to calculate a set comprising intrinsic and extrinsic parameters, and distortion coefficients based on the plurality of sets obtained during the in-house calibration, and based on the rough distance between the target and the camera calculated by the distance calculating module (120, 320). In a preferred embodiment, from among the plurality of sets, set 1 at distance 1, ...., set n at distance n, obtained during the in-house calibration, select one of the sets, for instance, by selecting the set whose distance is closest to the rough distance acquired at step (320). For instance, if there are sets for 0.3m, 0.5m, 1m, 2m and 5m, and the rough distance acquired at step (320) is 3m, the set selection module (140, 340) may select the set for 2m as the selected set as it is the closest set. It is to be understood that, the plurality of sets is stored in the data storage device (130) and set selection module (140, 340) is configured to select the set. 3D reconstruction of the target may be calculated by the 3D position reconstruction module (150, 350) based on the selected set.

In another embodiment, the set selection module (140, 340) is configured to select a first set and a second set (i.e., two sets) from among the plurality of sets whose distances are closest to the rough distance acquired at step (320). For instance, if there are sets for 0.3m, 0.5m, 1m, 2m and 5m, and the rough distance acquired at step (320) is 3m, the set selection module (140, 340) may select the set for 2m as the first set and the set for 5m as the second set as they are the two closest sets. Thereafter, the set selection module (140, 340) calculates an interpolated set from the first set and the second set. The interpolated set may be interpolated from the first and second sets by setting weights on the first and second sets based, for example, on a relative position of the target with regard to the first and second sets that are respectively acquired at a first distance and a second distance from the stereo camera. If the target is in-between the first distance and the second distance, at a distance n1 from the first distance of the first set and a distance n2 from the second distance of the second set, a weight of n2/(n1+n2) may be set on the first set and a weight of n1/(n1+n2) may be set on the second set when performing the weighted interpolation. 3D reconstruction of the target may be calculated by the 3D position reconstruction module (150, 350) based on the interpolated set.

The 3D position reconstruction module (150, 350) is configured to convert the 2D position of the detected target on the pair of pictures to a 3D position using the set of parameters calculated by the set selection module (140, 340). There are several conventional conversion methods for 2D to 3D form conversion, and the present invention is configured to use triangulation without adding limitation to the type of form conversion that can be used in the present invention. The conversion from the 2D position of the detected target to the 3D position is performed based on eq. 1 using the set of parameters (A, R, t in eq. 1) calculated by the set selection module (140, 340).

Subsequently, as any 2D position on the detected target on the pair of pictures can be converted into a 3D position by the 3D position reconstruction module (150, 350), the device (100) may calculate a size of the target by calculating a distance between two positions on the target. For example, a length of the fish may be calculated by converting a 2D position of a head of the fish and a 2D position of a tail of the fish on the pair of pictures into 3D positions and by calculating a distance between the 3D positions of the head and the tail of the fish.

A technical effect of the embodiments of the invention will now be described. Conventionally, underwater 3D reconstruction with stereo camera was performed with a single set of calibration parameters. However, when performing 3D reconstruction underwater, as the stereo camera is in a multi-medium (air, water, transparent window) environment, refractions occur. As a result, calibration parameters of the stereo camera change depending on the distance with the stereo camera.

In order to solve this problem, in embodiments of the present disclosure, the stereo camera is calibrated at a plurality of distances from the stereo camera. When performing a 3D reconstruction of a target, the target is reconstructed using calibration parameters that have been obtained at a distance that is close to a distance of the target. As a result, a more accurate 3D reconstruction can be achieved.

## Claims

1. A 3D reconstruction device (100), comprising:
a stereo camera (105, 110) comprising a first camera and a second camera configured to take a pair of pictures in an underwater environment of a target;
a data storage device (130) configured to store a set of parameters, the set of parameters modelling the stereo camera (105, 110) that produces pictures of an underwater target at a distance from the stereo camera (105, 110), the set of parameters comprising parameters of a pinhole camera model; and
a 3D reconstruction module (150) configured to calculate a 3D position of the target based on a 2D position of the target in the pair of pictures,
wherein the stereo camera is arranged to take pictures of the target through a plurality of different media,
**characterised in that**:
the data storage device (130) is configured to store a plurality of sets of parameters, each set of the plurality of sets of parameters modelling the stereo camera (105, 110) that produces the pictures of the underwater target at a distance from the stereo camera (105, 110),
wherein the parameters of each set of parameters comprise parameters of a pinhole camera model, the plurality of sets of parameters model the stereo camera at different distances, and the plurality of sets of parameters are arranged to compensate for refractions caused by the plurality of different media; and
the 3D reconstruction module (150) is configured to calculate the 3D position of the target based on the 2D position of the target in the pair of pictures using a selected set selected from the plurality of sets of parameters.

2. The device of claim 1, further comprising:
a distance calculation module (120) configured to calculate a distance between the target and the stereo camera (105, 110) based on a 2D position of the target in the pair of pictures; and
a set selection module (140) configured to select the selected set based on the calculated distance.

3. The device of claim 2, wherein:
the set selection module (140) is configured to select the selected set by selecting one set from the plurality of sets of parameters, the distance of the selected set being closest to the calculated distance from among the plurality of sets of parameters.

4. The device of claim 2, wherein:
the set selection module (140) is configured to select the selected set by selecting a first set and a second set from the plurality of sets of parameters, the distance of the first set and the second set being closest to the calculated distance on either side of the calculated distance, respectively.

5. The device of claim 4, wherein:
the 3D reconstruction module (150) is configured to calculate an interpolated set from the first set and the second set, and calculate the 3D position of the target based on the interpolated set.

6. The device of any one of claims 2 to 5, wherein:
the distance calculation module (120) is configured to calculate the distance using one of the plurality of sets of parameters.

7. The device of any one of claims 2 to 5, wherein:
the distance calculating module (120) is configured to calculate the distance using a focal length of the stereo camera (105, 110) and a refractive index of water with respect to air.

8. The device of any one of the previous claims, wherein:
each set of the plurality of sets of parameters is obtained by calibrating the stereo camera (105, 110) with an underwater target placed in a vicinity of the distance for which the set is to be obtained.

9. The device of any one of the previous claims, wherein:
the parameters of each set of parameters comprise intrinsic and extrinsic parameters of the pinhole camera model.

10. The device of any one of the previous claims, wherein:
the parameters of each set of parameters further comprise lens distortion coefficients.

11. The device of any one of the previous claims, further comprising:
a waterproof case (201) enclosing air (265) and the stereo camera (105, 110), and including a light transparent material (202) though which the stereo camera (105, 110) takes the pictures of the target.

12. The device of any one of the previous claims, wherein:
the first camera comprises one or more lens elements (531) arranged in a fixed position within the first camera; and
the second camera comprises one or more lens elements (531) arranged in a fixed position within the second camera.

13. The device of any of the preceding claims, further comprising means for calculating a size of the target by calculating a distance between two positions on the target.

14. An underwater fish size measurement device comprising the device of any of the preceding claims.

15. A processor-implemented 3D reconstruction method comprising:
capturing (311) a pair of pictures of a target in an underwater environment with a stereo camera;
storing a set of parameters, the set of parameters modelling the stereo camera that produces pictures of an underwater target at a distance from the stereo camera, the set of parameters comprising parameters of a pinhole camera model; and
calculating (350) a 3D position of the target based on a 2D position of the target in the pair of pictures,
wherein the stereo camera is arranged to take pictures of the target through a plurality of different media,
**characterising by**:
storing a plurality of sets of parameters, each set of the plurality of sets of parameters modelling the stereo camera that produces the pictures of the underwater target at a distance from the stereo camera,
wherein the parameters of each set of parameters comprise parameters of a pinhole camera model, the plurality of sets of parameters model the stereo camera at different distances, and the plurality of sets of parameters are arranged to compensate for refractions caused by the plurality of different media; and
calculating (350) the 3D position of the target based on the 2D position of the target in the pair of pictures using a selected set selected from the plurality of sets of parameters.

## Patentansprüche

1. 3D-Rekonstruktionsgerät (100), das Folgendes umfasst:
eine Stereokamera (105, 110), die eine erste Kamera und eine zweite Kamera umfasst, die zum Aufnehmen eines Paares von Bildern in einer Unterwasserumgebung eines Ziels konfiguriert sind;
ein Datenspeichergerät (130), konfiguriert zum Speichern eines Satzes von Parametern, wobei der Satz von Parametern die Stereokamera (105, 110) modelliert, die Bilder eines Unterwasserziels in einer Distanz von der Stereokamera (105, 110) produziert, wobei der Satz von Parametern Parameter eines Lochkameramodells umfasst; und
ein 3D-Rekonstruktionsmodul (150), konfiguriert zum Berechnen einer 3D-Position des Ziels auf der Basis einer 2D-Position des Ziels in dem Paar von Bildern,
wobei die Stereokamera zum Aufnehmen von Bildern des Ziels durch mehrere verschiedene Medien ausgelegt ist,
**dadurch gekennzeichnet, dass**:
das Datenspeichergerät (130) zum Speichern mehrerer Sätze von Parametern konfiguriert ist, wobei jeder Satz der mehreren Sätze von Parametern die Stereokamera (105, 110) modelliert, die die Bilder des Unterwasserziels in einer Distanz von der Stereokamera (105, 110) produziert,
wobei die Parameter jedes Satzes von Parametern Parameter eines Lochkameramodells umfassen, die mehreren Sätze von Parametern die Stereokamera in unterschiedlichen Distanzen modellieren und die mehreren Sätze von Parametern zum Kompensieren von durch die mehreren verschiedenen Medien verursachten Refraktionen ausgelegt sind; und
das 3D-Rekonstruktionsmodul (150) zum Berechnen der 3D-Position des Ziels auf der Basis der 2D-Position des Ziels in dem Paar von Bildern anhand eines ausgewählten Satzes konfiguriert ist, der aus den mehreren Sätzen von Parametern ausgewählt ist.

2. Gerät nach Anspruch 1, das ferner Folgendes umfasst:
ein Distanzberechnungsmodul (120), konfiguriert zum Berechnen einer Distanz zwischen dem Ziel und der Stereokamera (105, 110) auf der Basis einer 2D-Position des Ziels in dem Paar von Bildern; und
ein Satzauswahlmodul (140), konfiguriert zum Auswählen des ausgewählten Satzes auf der Basis der berechneten Distanz.

3. Gerät nach Anspruch 2, wobei:
das Satzauswahlmodul (140) zum Auswählen des ausgewählten Satzes durch Auswählen eines Satzes aus den mehreren Sätzen von Parametern konfiguriert ist, wobei die Distanz des ausgewählten Satzes unter den mehreren Sätzen von Parametern der berechneten Distanz am nächsten liegt.

4. Gerät nach Anspruch 2, wobei:
das Satzauswahlmodul (140) zum Auswählen des ausgewählten Satzes durch Auswählen eines ersten Satzes und eines zweiten Satzes aus den mehreren Sätzen von Parametern konfiguriert ist, wobei die Distanz des ersten Satzes und des zweiten Satzes der berechneten Distanz auf der einen bzw. der anderen Seite der berechneten Distanz am nächsten liegt.

5. Gerät nach Anspruch 4, wobei:
das 3D-Rekonstruktionsmodul (150) zum Berechnen eines interpolierten Satzes aus dem ersten Satz und dem zweiten Satz und zum Berechnen der 3D-Position des Ziels auf der Basis des interpolierten Satzes konfiguriert ist.

6. Gerät nach einem der Ansprüche 2 bis 5, wobei:
das Distanzberechnungsmodul (120) zum Berechnen der Distanz anhand von einem der mehreren Sätze von Parametern konfiguriert ist.

7. Gerät nach einem der Ansprüche 2 bis 5, wobei:
das Distanzberechnungsmodul (120) zum Berechnen der Distanz anhand einer Brennweite der Stereokamera (105, 110) und eines Brechungsindex von Wasser im Verhältnis zu Luft konfiguriert ist.

8. Gerät nach einem der vorherigen Ansprüche, wobei:
jeder Satz der mehreren Sätze von Parametern durch Kalibrieren der Stereokamera (105, 110) mit einem Unterwasserziel erhalten wird, das in einer Nähe der Distanz platziert ist, für die der Satz erhalten werden soll.

9. Gerät nach einem der vorherigen Ansprüche, wobei:
die Parameter jedes Satzes von Parametern intrinsische und extrinsische Parameter des Lochkameramodells umfassen.

10. Gerät nach einem der vorherigen Ansprüche, wobei:
die Parameter jedes Satzes von Parametern ferner Linsenverzerrungskoeffizienten umfassen.

11. Gerät nach einem der vorherigen Ansprüche, das ferner Folgendes umfasst:
ein wasserdichtes Gehäuse (201), das Luft (265) und die Stereokamera (105, 110) umschließt und ein lichtdurchlässiges Material (202) enthält, durch das die Stereokamera (105, 110) die Bilder des Ziels aufnimmt.

12. Gerät nach einem der vorherigen Ansprüche, wobei:
die erste Kamera ein oder mehrere Linsenelemente (531) umfasst, die in einer festen Position innerhalb der ersten Kamera angeordnet sind; und
die zweite Kamera ein oder mehrere Linsenelemente (531) umfasst, die in einer festen Position innerhalb der zweiten Kamera angeordnet sind.

13. Gerät nach einem der vorherigen Ansprüche, das ferner Mittel zum Berechnen einer Größe des Ziels durch Berechnen einer Distanz zwischen zwei Positionen auf dem Ziel umfasst.

14. Unterwasser-Fischgrößenmessgerät, das das Gerät nach einem der vorherigen Ansprüche umfasst.

15. Prozessorimplementiertes 3D-Rekonstruktionsverfahren, das Folgendes beinhaltet:
Aufnehmen (311) eines Paares von Bildern eines Ziels in einer Unterwasserumgebung mit einer Stereokamera;
Speichern eines Satzes von Parametern, wobei der Satz von Parametern die Stereokamera modelliert, die Bilder eines Unterwasserziels in einer Distanz von der Stereokamera produziert, wobei der Satz von Parametern Parameter eines Lochkameramodells umfasst; und
Berechnen (350) einer 3D-Position des Ziels auf der Basis einer 2D-Position des Ziels in dem Paar von Bildern,
wobei die Stereokamera zum Aufnehmen von Bildern des Ziels durch mehrere verschiedene Medien ausgelegt ist,
**gekennzeichnet durch**:
Speichern mehrerer Sätze von Parametern, wobei jeder Satz der mehreren Sätze von Parametern die Stereokamera modelliert, die die Bilder des Unterwasserziels in einer Distanz von der Stereokamera produziert,
wobei die Parameter jedes Satzes von Parametern Parameter eines Lochkameramodells umfassen, die mehreren Sätze von Parametern die Stereokamera in unterschiedlichen Distanzen modellieren und die mehreren Sätze von Parametern zum Kompensieren von durch die mehreren verschiedenen Medien verursachten Refraktionen ausgelegt sind; und
Berechnen (350) der 3D-Position des Ziels auf der Basis der 2D-Position des Ziels in dem Paar von Bildern anhand eines ausgewählten Satzes, der aus den mehreren Sätzen von Parametern ausgewählt ist.

## Revendications

1. Dispositif de reconstruction 3D (100), comprenant :
une caméra stéréo (105, 110) comprenant une première caméra et une seconde caméra configurées pour prendre une paire d'images d'une cible dans un environnement sous-marin ;
un dispositif de stockage de données (130) configuré pour stocker un ensemble de paramètres, l'ensemble de paramètres modélisant la caméra stéréo (105, 110) qui produit des images d'une cible sous-marine à une distance de la caméra stéréo (105, 110), l'ensemble de paramètres comprenant des paramètres d'un modèle de caméra à sténopé ; et
un module de reconstruction 3D (150) configuré pour calculer une position 3D de la cible sur la base d'une position 2D de la cible dans la paire d'images,
la caméra stéréo étant conçue pour prendre des images de la cible à travers une pluralité de milieux différents,
**caractérisé en ce que** :
le dispositif de stockage de données (130) est configuré pour stocker une pluralité d'ensembles de paramètres, chaque ensemble parmi la pluralité d'ensembles de paramètres modélisant la caméra stéréo (105, 110) qui produit les images de la cible sous-marine à une distance de la caméra stéréo (105, 110),
les paramètres de chaque ensemble de paramètres comprenant des paramètres d'un modèle de caméra à sténopé, la pluralité d'ensembles de paramètres modélisant la caméra stéréo à différentes distances, et la pluralité d'ensembles de paramètres étant conçus pour compenser des réfractions causées par la pluralité de milieux différents ; et
le module de reconstruction 3D (150) est configuré pour calculer la position 3D de la cible sur la base de la position 2D de la cible dans la paire d'images au moyen d'un ensemble sélectionné, sélectionné parmi la pluralité d'ensembles de paramètres.

2. Dispositif selon la revendication 1, comprenant en outre :
un module de calcul de distance (120) configuré pour calculer une distance entre la cible et la caméra stéréo (105, 110) sur la base d'une position 2D de la cible dans la paire d'images ; et
un module de sélection d'ensemble (140) configuré pour sélectionner l'ensemble sélectionné sur la base de la distance calculée.

3. Dispositif selon la revendication 2,
le module de sélection d'ensemble (140) étant configuré pour sélectionner l'ensemble sélectionné en sélectionnant un ensemble parmi la pluralité d'ensembles de paramètres, la distance de l'ensemble sélectionné étant la plus proche de la distance calculée parmi la pluralité d'ensembles de paramètres.

4. Dispositif selon la revendication 2,
le module de sélection d'ensemble (140) étant configuré pour sélectionner l'ensemble sélectionné en sélectionnant un premier ensemble et un second ensemble parmi la pluralité d'ensembles de paramètres, la distance du premier ensemble et du second ensemble étant respectivement la plus proche de la distance calculée de chaque côté de la distance calculée.

5. Dispositif selon la revendication 4,
le module de reconstruction 3D (150) étant configuré pour calculer un ensemble interpolé à partir du premier ensemble et du second ensemble, et pour calculer la position 3D de la cible sur la base de l'ensemble interpolé.

6. Dispositif selon l'une quelconque des revendications 2 à 5,
le module de calcul de distance (120) étant configuré pour calculer la distance au moyen d'un ensemble parmi la pluralité d'ensembles de paramètres.

7. Dispositif selon l'une quelconque des revendications 2 à 5,
le module de calcul de distance (120) étant configuré pour calculer la distance au moyen d'une distance focale de la caméra stéréo (105, 110) et d'un indice de réfraction de l'eau par rapport à l'air.

8. Dispositif selon l'une quelconque des revendications précédentes,
chaque ensemble parmi la pluralité d'ensembles de paramètres étant obtenu en étalonnant la caméra stéréo (105, 110) avec une cible sous-marine placée au voisinage de la distance pour laquelle l'ensemble doit être obtenu.

9. Dispositif selon l'une quelconque des revendications précédentes,
les paramètres de chaque ensemble de paramètres comprenant des paramètres intrinsèques et extrinsèques du modèle de caméra à sténopé.

10. Dispositif selon l'une quelconque des revendications précédentes,
les paramètres de chaque ensemble de paramètres comprenant en outre des coefficients de distorsion de lentille.

11. Dispositif selon l'une quelconque des revendications précédentes, comprenant en outre :
un boîtier étanche à l'eau (201) renfermant de l'air (265) et la caméra stéréo (105, 110), et comprenant un matériau transparent à la lumière (202) à travers lequel la caméra stéréo (105, 110) prend les images de la cible.

12. Dispositif selon l'une quelconque des revendications précédentes,
la première caméra comprenant un ou plusieurs éléments de lentille (531) agencés dans une position fixe à l'intérieur de la première caméra ; et
la seconde caméra comprenant un ou plusieurs éléments de lentille (531) agencés dans une position fixe à l'intérieur de la seconde caméra.

13. Dispositif selon l'une quelconque des revendications précédentes, comprenant en outre un moyen permettant de calculer une taille de la cible en calculant une distance entre deux positions sur la cible.

14. Dispositif sous-marin de mesure de taille de poisson comprenant le dispositif selon l'une quelconque des revendications précédentes.

15. Procédé de reconstruction 3D mis en œuvre par processeur, comprenant les étapes consistant à :
capturer (311) une paire d'images d'une cible dans un environnement sous-marin avec une caméra stéréo ;
stocker un ensemble de paramètres, l'ensemble de paramètres modélisant la caméra stéréo qui produit des images d'une cible sous-marine à une distance de la caméra stéréo, l'ensemble de paramètres comprenant des paramètres d'un modèle de caméra à sténopé ; et
calculer (350) une position 3D de la cible sur la base d'une position 2D de la cible dans la paire d'images,
la caméra stéréo étant conçue pour prendre des images de la cible à travers une pluralité de milieux différents,
le procédé étant **caractérisé par** les étapes consistant à :
stocker une pluralité d'ensembles de paramètres, chaque ensemble parmi la pluralité d'ensembles de paramètres modélisant la caméra stéréo qui produit les images de la cible sous-marine à une distance de la caméra stéréo,
les paramètres de chaque ensemble de paramètres comprenant des paramètres d'un modèle de caméra à sténopé, la pluralité d'ensembles de paramètres modélisant la caméra stéréo à différentes distances, et la pluralité d'ensembles de paramètres étant conçus pour compenser des réfractions causées par la pluralité de milieux différents ; et
calculer (350) la position 3D de la cible sur la base de la position 2D de la cible dans la paire d'images au moyen d'un ensemble sélectionné, sélectionné parmi la pluralité d'ensembles de paramètres.
